# EUROPEAN PATENT SPECIFICATION

(11) **EP 3 441 221 B1**
(45) Date of publication and mention of the grant of the patent: **27.05.2020**
(21) Application number: 18187775.4
(22) Date of filing: 07.08.2018
(51) Int. Cl.: B32B 7/12, B29C 70/54, B28B 11/04, B29C 70/30, B29C 70/78

(54) **PLANT AND METHOD TO APPLY A REINFORCEMENT MATERIAL PROVIDED WITH A PLURALITY OF FILAMENTS, PREFERABLY A REINFORCEMENT FABRIC MADE OF GLASS FIBRE, TO A CERAMIC PRODUCT**
ANLAGE UND VERFAHREN ZUM AUFBRINGEN EINES VERSTÄRKUNGSMATERIALS MIT EINER VIELZAHL VON FILAMENTEN, VORZUGSWEISE EIN AUS GLASFASER HERGESTELLTES VERSTÄRKUNGSGEWEBE, AUF EIN KERAMISCHES PRODUKT
INSTALLATION ET PROCÉDÉ POUR APPLIQUER UN MATÉRIAU DE RENFORCEMENT POURVU D'UNE PLURALITÉ DE FILAMENTS, DE PRÉFÉRENCE UN TEXTILE DE RENFORCEMENT COMPOSÉ DE FIBRES DE VERRE, SUR UN PRODUIT EN CÉRAMIQUE

(30) Priority: 07.08.2017 IT 201700091299
(43) Date of publication of application: 13.02.2019
(73) Proprietor: SACMI COOPERATIVA MECCANICI IMOLA SOCIETA' COOPERATIVA, 40026 Imola (BO) (IT)
(72) Inventor: GONNI, Paolo, 40026 IMOLA (BO) (IT); BACCOLINI, Valentino, 40026 IMOLA (BO) (IT)
(74) Representative: Musconi, Roberta

(56) References cited:
- EP-A2- 0 731 237
- ES-A1- 2 302 451
- US-A- 5 085 917

## Description

### CROSS-REFERENCE TO RELATED APPLICATIONS

This application claims priority from Italian Patent Application No. 102017000091299 filed on August 7, 2017.

### TECHNICAL FIELD

The present invention relates to a plant and to a method to apply a reinforcement material provided with a plurality of filaments, preferably a reinforcement fabric made of glass fibre, to a ceramic product.

### BACKGROUND TO THE INVENTION

In recent years ceramic products such as ceramic tiles and flagstones having large dimensions have been widely used, for example a width in the order of 1 m and a length in the order of even 3 m. Said large-size ceramic products are used, for example, both for flooring and to face outer walls of buildings (so-called "ventilated walls"). In the case of extraordinary events (such as accidental impact or violent atmospheric phenomena) said ceramic products can break. To remedy this problem, a rear reinforcement for the ceramic products has been proposed which improves the mechanical resistance thereof.

Large-size ceramic products are produced in plants that typically comprise a pressing apparatus adapted to obtain semi-finished ceramic articles by pressing a ceramic powder and a kiln for firing the semi-finished ceramic products. The ceramic products are then transported by a conveyor assembly with their rear surface of said products facing upwards to achieve the coupling to the rear reinforcement. The conveyor assembly is designed to feed the ceramic products forward at a substantially constant speed preferably ranging between 1 and 15 m/min to a dispensing device that dispenses a resin, preferably thermosetting, which makes the rear reinforcement integral with the ceramic product.

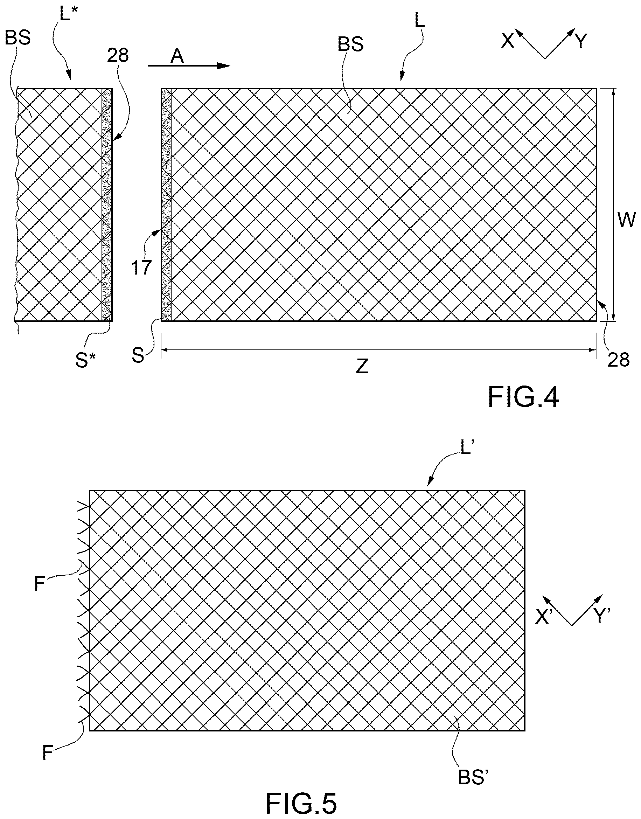

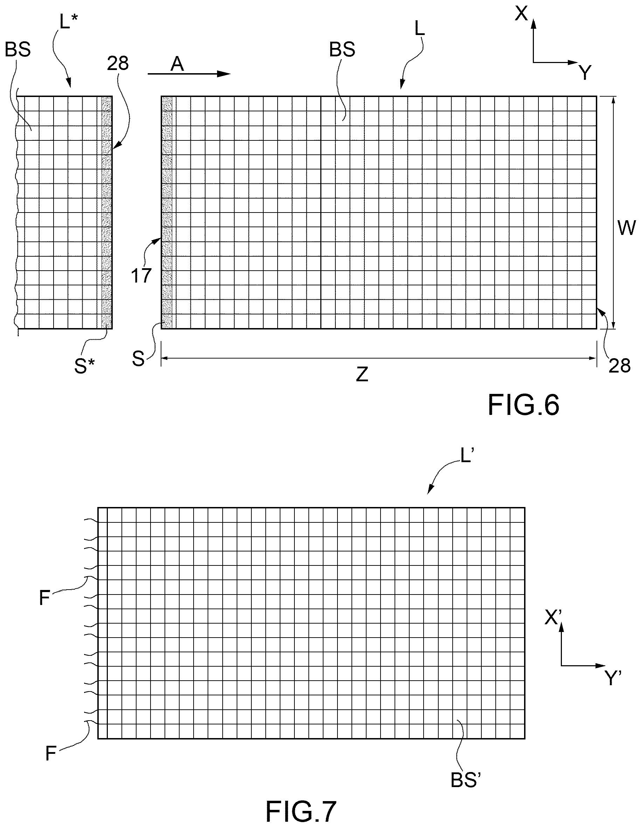

After application of the layer of substantially uniform resin on the rear surface, the ceramic products are fed to the area of a unit for application of the rear reinforcement. The application unit comprises an unwinding device to unwind the reinforcement from a reel; the reinforcement material is typically produced by means of a coarsely woven fibreglass fabric or matting obtained from fibres known also as roving (a bundle formed from numerous glass primary filaments collected together, usually not twisted). A large-size ceramic product L' produced by means of the plant just described is illustrated both in figure 5 and in figure 7. The fibres of the fibreglass fabric or matting are interlaced in two main directions X' and Y' orthogonal to each other; in which a first group of fibres defines the weft and a second group of fibres defines the warp and in which a weft thread overlaps a warp thread and vice versa. The glass fibres are therefore orientated in two main directions X' and Y' corresponding to the weft and to the warp and orthogonal to each other. The reinforcement material thus produced offers good performance in terms of mechanical resistance in the two main directions X' and Y'. According to the preferred variation illustrated in figure 7, the fibres of the warp and the fibres of the weft are orientated in directions parallel to the edges of the ceramic product L'. According to a further variation illustrated in figure 5, both the fibres of the warp and the fibres of the weft are orientated in respective directions inclined by approximately 45° with respect to the edges of the ceramic product L'.

The application unit comprises a fixed support frame to support the reinforcement material unwound from the reel defining a feeding plane of the reinforcement material unwound from the reel which deposits on the rear surface BS' of the corresponding ceramic product L'.

Along the frame a cutting device is also provided designed to transversely cut the reinforcement material unwound from the reel and comprising at least one rotating cutting blade, provided to come into contact with the reinforcement material. Lastly, downstream of the cutting device, a polymerization device is provided to polymerize the layer of substantially uniform resin applied on the rear surface by the dispensing device.

For example, EP731237 relates to a plant for applying a water-repellent surface layer on a product.

However, the plants described so far have some drawbacks. In particular, the glass fibre fabric unwound from the reel has a highly unstable form and during the cutting phase frayed threads F may occur, caused by detachment of the glass fibres closest to the cutting line. As illustrated in figures 5 and 7, the frayed threads F extend beyond the rear surface BS' of the ceramic product L' making the ceramic product L' thus obtained aesthetically unappealing; furthermore, the presence of the frayed threads F is very dangerous as they could become entangled or jammed in the movement systems (for example, roller conveyors) that transfer the ceramic products L'.

The document ES 2 302 451 A1 discloses a plant in accordance with the preamble of claim 1 and a method to apply a reinforcement material on a surface of a ceramic product in order to increase the mechanical resistance thereof.

The object of the present invention is therefore to provide a plant to apply a reinforcement material provided with a plurality of filaments, preferably a glass fibre reinforcement fabric, to a ceramic product, which is free from the drawbacks of the state of the art and is, at the same time, easy and inexpensive to produce.

A further object of the present invention is to provide a method to apply a reinforcement material provided with a plurality of filaments, preferably a reinforcement fabric made of glass fibre, to a ceramic product, which is free from the drawbacks of the state of the art and is, at the same time, easy and inexpensive to implement.

### SUMMARY

According to the present invention, a plant and a method are provided to apply a reinforcement material provided with a plurality of filaments, preferably a reinforcement fabric made of glass fibres, to a ceramic product as claimed in the attached claims.

### BRIEF DESCRIPTION OF THE FIGURES

The invention is described below with reference to the attached drawings, which illustrate some non-limiting implementation examples thereof, in which:
- figure 1 is a schematic side view of a plant to apply a reinforcement material provided with a plurality of filaments, preferably a reinforcement fabric made of glass fibre, to a ceramic product produced according to the present invention;

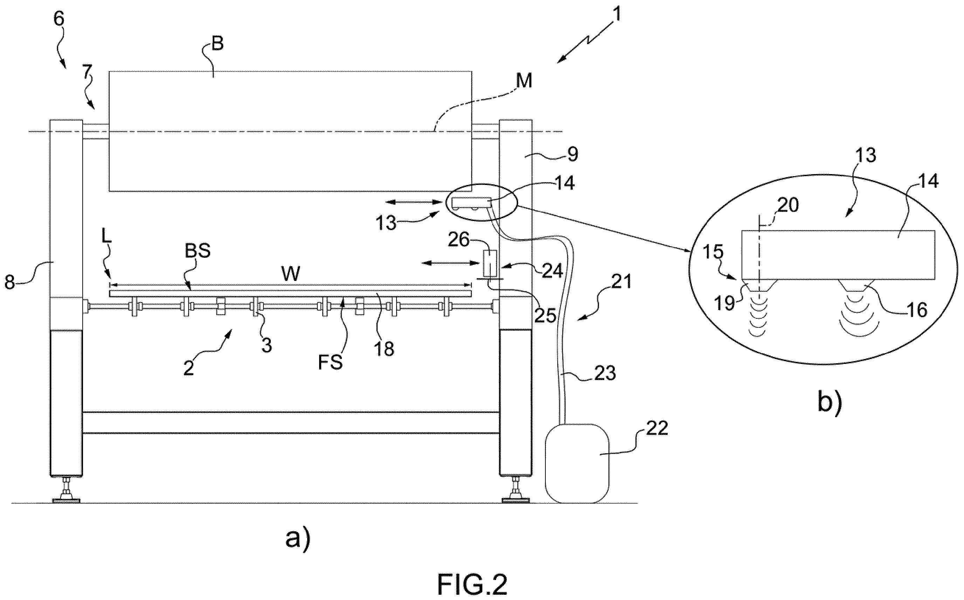

- figures 2a and 2b are, respectively, a section view along the line II-II of the plant of figure 1 and an enlarged detail of figure 2a;

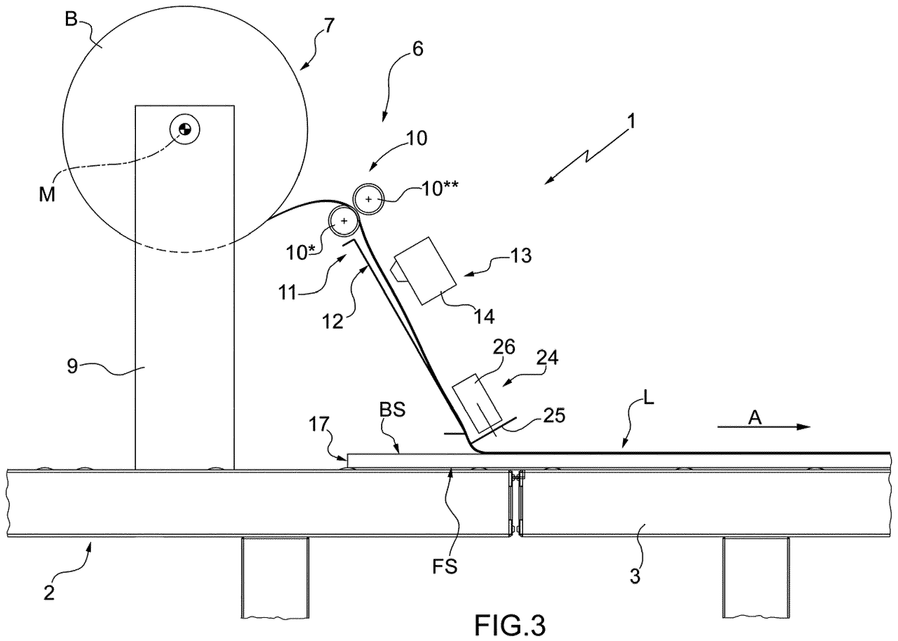

- figure 3 is an enlarged view of a detail of figure 1; and
- figure 4 represents a first variation of a ceramic product produced by means of the plant to apply a reinforcement material provided with a plurality of filaments produced according to the present invention;
- figure 5 shows a first variation of a ceramic product obtained by means of a plant to apply a reinforcement material provided with a plurality of filaments produced according to the prior art;
- figure 6 shows a second variation of a ceramic product produced by means of the plant to apply a reinforcement material provided with a plurality of filaments produced according to the present invention; and
- figure 7 shows a second variation of a ceramic product obtained by means of a plant to apply a reinforcement material provided with a plurality of filaments produced according to the prior art.

### DETAILED DISCLOSURE

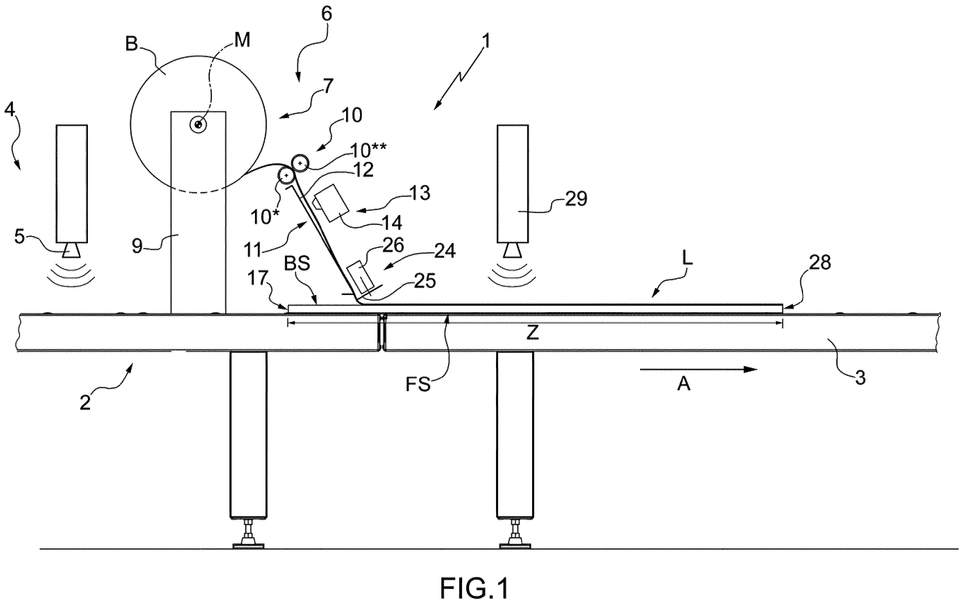

In figure 1, the number 1 denotes overall a plant for the production of ceramic products L, such as, for example ceramic tiles or flagstones having a width W in the order of approximately 1 m and a length Z, in the order also of 3 m. The ceramic products L are provided with a surface FS designed for exposure and a rear surface BS designed for coupling with a reinforcement which improves the mechanical resistance thereof.

The plant 1 comprises a pressing apparatus (not illustrated) adapted to obtain semi-finished ceramic articles by pressing a ceramic powder, and a kiln, in particular a tunnel kiln (not illustrated), for firing the semi-finished ceramic products so as to obtain, after a cooling phase, the ceramic products L. The plant 1 comprises a conveyor assembly 2 made to transfer the ceramic products L in a substantially continuous manner in a feeding direction A from the pressing apparatus. In particular, the ceramic products L are conveyed with the surface FS designed for exposure facing towards the conveyor assembly 2 and with the rear surface BS facing upwards to couple with the reinforcement which improves the mechanical resistance characteristics. The conveyor assembly 2 is realized preferably by a roller conveyor 3 or a conveyor belt or a belt conveyor. The conveyor assembly 2 is designed to feed the ceramic products L at a substantially constant speed preferably ranging between 1 and 15 m/min.

The plant 1 comprises a dispensing device 4 to dispense a resin which makes the reinforcement material integral with the ceramic product L and is arranged above the conveyor assembly 2. Advantageously, a thermosetting resin is used. In particular, the thermosetting resin is chosen from the following: epoxy resin, polyurethane resin, polyester resin, or a combination thereof.

The dispensing device 4 comprises a number of nozzles 5 (only one of which is illustrated in figure 1) having respective axes, preferably orthogonal to the feeding direction A. The dispensing device 4 is alternatively fixed or movable relative to the conveyor assembly 2. The dispensing device 4 is designed to apply, by means of said nozzles 5, a layer of substantially uniform resin on the rear surfaces BS of the ceramic products L.

Alternatively to the nozzles 5, the dispensing device 4 can comprise a number of brushes designed to apply through contact a layer of substantially uniform resin on the rear surfaces BS of the ceramic products L.

The dispensing device 4 is also provided with a resin feeding circuit comprising a tank containing the resin, a duct that originates from the tank and hydraulically communicates with the dispensing device 4, and a pump that draws the resin from the tank and feeds it under pressure to the dispensing device 4.

After application of the layer of substantially uniform resin on the rear surface BS, the ceramic product L moves forward to a unit 6 for application of the reinforcement material.

The application unit 6 is also arranged above the conveyor assembly 2, downstream of the glue dispensing device 4.

The application unit 6 comprises an unwinding device 7 for unwinding the reinforcement material from a reel B.

The reinforcement material typically is a reinforcement fabric. According to a preferred variation, the reinforcement fabric is obtained from a coarsely woven fibreglass mat obtained from fibres also known as roving (bundle formed from numerous primary glass filaments collected together, usually not twisted) wound in reels B. The fibres of the fabric or mat made of glass fibre are interlaced with each other along two main directions X and Y (illustrated in figures 4 and 6) orthogonal to each other; in which a first group of fibres defines the weft and a second group of fibres defines the warp and in which a weft thread overlaps a warp thread and vice versa. The glass fibres are therefore orientated in two main directions X and Y (illustrated in figures 4 and 6) corresponding to the weft and to the warp and orthogonal to each other.

According to a preferred variation illustrated in figure 6, the fibres of the warp are orientated along a direction orthogonal to the rotation axis M of the reel B (and substantially parallel to the feeding direction A) while the fibres of the weft are orientated in a direction parallel to the rotation axis M of the reel B (and substantially orthogonal to the feeding direction A) . In other words, both the fibres of the warp and the fibres of the weft are orientated in respective directions parallel to the edges of the ceramic product L.

According to a further variation illustrated in figure 4, both the fibres of the warp and the fibres of the weft are orientated in a direction inclined by approximately 45° relative to the rotation axis M of the reel B (and inclined by approximately 45° relative to the feeding direction A) . In other words, both the fibres of the warp and the fibres of the weft are orientated in respective directions inclined in respect to the edges of the ceramic product L.

Alternatively, the reinforcement material can be a non-woven fabric.

The reel B has a transverse dimension substantially coinciding with the width W of the ceramic product L to be treated.

The reinforcement material thus provided offers good performance in terms of mechanical resistance in the two main directions X and Y.

The application unit 3 comprises detection means, for example sensors or photocells (of a known type and not described in detail) to detect the passage of a ceramic product L into the application unit 3 and to check the correct orientation on the conveyor assembly 2.

The application unit 6 comprises a pair of support arms to support the reel B during unwinding, indicated by 8 and 9 respectively, arranged on opposite sides of the conveyor assembly 2 and so that the reel B is orientated with its rotation axis M orthogonal to the feeding direction A.

The application unit 6 comprises a tensioning device 10 to tension the reinforcement material unwound from the reel B typically realized by a pair of rollers 10*, 10** (comprising one control roller and one counter roller) which hold the reinforcement material between them and which cooperate to unwind the reel B and keep the reinforcement material tensioned.

Preferably, the reinforcement material is unwound from the reel B at the same speed, preferably constant, at which the conveyor assembly 2 feeds the ceramic products L.

The application unit 6 also comprises a fixed support frame 11 to support the reinforcement material unwound from the reel B positioned downstream of the tensioning device 10. The frame 11 is realized by a plate inclined so as to define a chute 12 inclined relative to the feeding direction A and the upper surface of which defines a feeding plane to feed the reinforcement material unwound from the reel B. The reinforcement material unwound from the reel B, coming out of the chute 12, is deposited on the corresponding ceramic product L. The chute 12 allows the correct positioning of the reinforcement material relative to the rear surface BS of the ceramic product L on which it is deposited.

According to a preferred variation, the chute 12 is provided with two side appendages (not illustrated) which project upwards and are adapted to contain, on its sides, the reinforcement material unwound from the reel B.

Along the frame 11 a treatment device 13 is provided for treating the reinforcement material unwound from the reel B. Said device 13 comprises a carriage 14 which is movable in a direction orthogonal to the feeding direction A. In particular, the carriage 14 is movable so as to cover, with its stroke, the entire width W of the ceramic product L to be treated. The carriage 14 is coupled to a slide (not illustrated) which runs freely on a linear guide (not illustrated) arranged in a fixed position, consisting of a track and operated by a linear electric motor.

The carriage 14 supports a device 15 for the application of an at least partially liquid material, in particular a resin on the reinforcement material unwound from the reel B and a treatment device 16 for treating the at least partially liquid material arranged side-by-side.

The application device 15 is designed to apply a strip S or bead of substantially uniform resin on the reinforcement material unwound from the reel B. In particular, the application device 15 is designed to apply a strip S or bead of substantially uniform resin on the reinforcement material at a cutting line as better described in the following discussion. In greater detail, the application device 15 is designed to apply a strip S or bead of resin on the reinforcement material unwound from the reel B in the area which is superimposed on the rear surface BS in the vicinity of a rear edge 17 formed by a smaller side wall 18 of the ceramic product L and the rear surface BS itself. Advantageously, a thermosetting resin is used. In particular, the thermosetting resin is chosen from the following: epoxy resin, polyurethane resin, polyester resin, or a combination thereof.

According to a preferred variation, the application device 15 is realized by a nozzle 19 (for application of the resin without contact) having a respective axis 20, preferably orthogonal to the feeding direction A.

Alternatively, the application device 15 is realized by a brush (for application of the resin by contact).

The application device 15 is connected to a feeding circuit 21 to feed the resin comprising a tank 22 containing the resin, a duct 23 which originates from the tank 22 and is in hydraulic communication with the application device 15, and a pump (of a known type and not illustrated) which draws the resin from the tank 22 and feeds it under pressure to the application device 15. According to a preferred variation, below the chute 12, a collecting basin (not illustrated) is housed to collect the resin provided with a suction system. The tank 22 can alternatively coincide or not with the tank of the dispensing device 4.

According to some non-limiting embodiments, the feeding circuit 21 for feeding the resin comprises at least one device for conditioning the resin designed to thermally treat (in particular, to heat) the resin so as to optimize the process of deposition of the resin strip S. The device for conditioning the resin is housed along the duct 23, preferably upstream of the pump. For example, the device for conditioning the resin can be chosen from an electrical resistance, a source of infrared radiations, a source of laser radiations, a source of microwaves or a combination thereof.

Beside the application device 15, the resin treatment device 16 is housed. The treatment device 16 is designed to achieve the hardening (at least partial solidification) of the resin strip S before the cutting phase.

According to a first variation, if the resin used is a thermosetting resin, the treatment device 16 is chosen from an electrical resistance, a hot air dispensing device or a combination thereof.

In accordance with a second variation, if the resin used is a resin that polymerizes through UV radiation, the treatment device 16 is realized by a source of UV rays (such as, for example, an Hg-vapour lamp or a LED lamp).

In accordance with a third variation, if the at least partially liquid material used is a self-setting resin (which hardens for example in contact with the air) able to set rapidly, the treatment device 16 is not provided.

The application device 15 and the treatment device 16 are arranged side-by-side on the carriage 14 so that the application device 15 faces inwards, in other words towards the ceramic product L, while the treatment device 16 faces outwards, i.e. towards the support arm 9 that supports the reel B. The carriage 14 is movable between two extreme positions defined at the two support arms 8, 9 supporting the reel L. According to a first variation, during the outward stroke of the carriage 14 from the support arm 9 to the support arm 8, the application device 15 applies the resin strip S; whereas during the return stroke of the carriage 14 from the support arm 8 to the support arm 9, the treatment device 16 polymerizes the resin strip S just applied.

According to a second variation, during the outward stroke of the carriage 14 from the support arm 9 to the support arm 8, the application device 15 applies the resin strip S and the treatment device 16 polymerizes the resin strip S just applied.

According to a variation, the application device 15 is designed to apply a substantially uniform bead of resin on the reinforcement material which identifies a strip S of resin on the reinforcement material at the area superimposed on the rear surface BS in the vicinity of the rear edge 17 of the ceramic product L and simultaneously a strip S* of resin on the reinforcement material at the area superimposed on the rear surface BS in the vicinity of a front edge 27 formed from the rear surface BS and the smaller side wall 28 of the ceramic product L* which follows on the conveyor assembly 2.

According to a further variation not illustrated, a pair of carriages 14 are provided positioned in sequence along the fixed frame 11, a first carriage 14 of which supports the device 15 for application of the resin on the reinforcement material unwound from the reel B and a second carriage 14, positioned downstream of the first carriage 14, supports the treatment device 16 for treating the resin arranged side-by-side.

The plant 1 also comprises a cutting device 24, positioned downstream of the treatment device 13 for treating the reinforcement material unwound from the reel B and designed to transversely cut the reinforcement material unwound from the reel B along the cutting line (at which the resin strip S had been applied). The cutting device 24 is designed to cut the reinforcement material continuously fed in pieces of length substantially equal to the length Z of the individual ceramic products L. The cutting device 24 comprises at least one rotating cutting blade 25, which is adapted to come into contact with the reinforcement material to cut it transversely. Alternatively, the cutting device 24 can comprise a rotating blade which cooperates with a fixed linear counter-blade (so-called scissor system) or a fixed linear blade which cooperates with a movable linear counter-blade (so-called guillotine system).

The cutting device 24 is arranged along the frame 11 and comprises a carriage 26 movable in a direction orthogonal to the feeding direction A. In particular, the carriage 26 is movable so as to cover, with its stroke, the entire width W of the ceramic product L to be treated. The carriage 26 is coupled to a slide (not illustrated) which runs freely on a linear guide (not illustrated) arranged in a fixed position, consisting of a track and operated by a linear electric motor.

Downstream of the cutting device 24, along the conveyor assembly 2, a polymerization device 29 is provided to polymerize the layer of substantially uniform resin applied on the rear surface BS by the dispensing device 4. The polymerization device 29 is also arranged above the conveyor assembly 2. In accordance with a first variation, if the resin used is a thermosetting resin, the polymerization device 29 is chosen from an electrical resistance, a hot air dispensing device or a combination thereof.

In accordance with a second variation, if the resin used is a resin that polymerizes through UV radiation, the polymerization device 29 is realized by a source of UV rays (for example, an Hg-vapour lamp or a LED lamp).

Obviously, the reinforcement material unwound from reel B can be applied alternatively or in combination also on the front surface FS of the ceramic products to increase the mechanical resistance thereof.

Unless explicitly indicated otherwise, the content of the references (articles, books, patent applications etc.) cited in this text are referred to here in full. In particular the mentioned references are incorporated herein for reference.

The plant 1 and the method for the production of ceramic products L described so far have the advantage of obtaining finished ceramic products L which are aesthetically appealing and without frayed threads which could become jammed in the conveying systems as a result of application of the strip S, S' of resin which prevents the frayed threads becoming detached during the subsequent cutting phase.

## Claims

1. A plant (1) to apply a reinforcement material, which is provided with a plurality of filaments, in particular a reinforcement fabric, on at least one surface (BS, FS) of a ceramic product (L) in order to increase the mechanical resistance thereof, said plant comprising an unwinding device (7) to unwind a continuous band of reinforcement material; and a cutting device (24), which is designed to transversely cut the continuous band of reinforcement material along a cutting line; the plant comprises a unit (13) for the treatment of the reinforcement fabric, which is arranged upstream of the cutting device (24) and comprises a device (15) for the application of an at least partially liquid material on the reinforcement fabric in the area of the cutting line, and a device (16) for the hardening of the at least partially liquid material applied on the reinforcement material in the area of the cutting line; **characterized in that** the unit (13) for the treatment of the reinforcement material comprises at least one carriage (14), which is movable along a direction that is transverse to a feeding direction (A) of the ceramic product (L), so as to cover, with its stroke, a first size (W) of the ceramic product (L).

2. The plant according to claim 1, wherein the carriage (14) supports at least one between the device (15) for the application of the at least partially liquid material and the device (16) for the hardening of the at least partially liquid material.

3. The plant according to any one of the preceding claims, wherein the device (15) for the application of the at least partially liquid material is connected to a feeding circuit (21) comprising a tank (22), which contains the at least partially liquid material, and a duct (23), which originates from the tank (22); wherein the feeding circuit (21) preferably comprises at least one device for the conditioning of the at least partially liquid material, which is designed to thermally treat, in particular to heat, the at least partially liquid material and is housed along the duct (23).

4. The plant according to any one of the preceding claims, wherein the device (15) for the application of the at least partially liquid material is realized by at least one nozzle (19), which has a respective axis (20), which is preferably transverse to the feeding direction (A).

5. The plant according to any one of the claims from 1 to 4, wherein the device (15) for the application of the at least partially liquid material is realized by at least one brush.

6. The plant according to any one of the preceding claims, wherein the at least partially liquid material used is a thermosetting resin and the device (16) for the hardening of the at least partially liquid material is an electrical resistance or a hot air dispensing device or a combination thereof.

7. The plant according to any one of the claims from 1 to 5, wherein the at least partially liquid material used is a resin that polymerizes through radiation, in particular UV radiation, and the device (16) for the hardening of the at least partially liquid material is realized by a source of radiation, in particular UV rays, preferably through a hg-vapour lamp or a LED lamp.

8. The plant according to any one of the preceding claims and comprising a frame (11) having a surface that defines a sliding plane for the continuous band of reinforcement material; wherein the unit (13) for the treatment of the reinforcement material and the cutting device (24) are arranged in succession along the frame (11).

9. The plant according to claim 8 and comprising a tensioning device (10) for the continuous band of reinforcement material, which is arranged along the frame (11) upstream of the unit (13) for the treatment of the reinforcement material; the tensioning device (10) preferably is realized by a pair of rollers (10*, 10**), which hold the continuous band of reinforcement material between them and cooperate to keep said reinforcement material tensioned.

10. The plant according to any one of the preceding claims, wherein the ceramic products (L) are fed along a feeding direction (A) by a conveyor assembly (2), which is arranged under the unit (13) for the treatment of the reinforcement material, at a substantially constant speed; wherein the continuous band of reinforcement material is unwound at a speed that is equal to the speed at which the ceramic products (L) are fed.

11. A method (1) to apply a reinforcement material, which is provided with a plurality of filaments, in particular a reinforcement fabric, on at least one surface (BS, FS) of a ceramic product (L) in order to increase the mechanical resistance thereof, said method comprising the following steps:
feeding a continuous band of reinforcement material;
feeding the ceramic product (L) in a feeding direction (A) at a speed equal to the speed at which the continuous band of reinforcement material is unwound;
moving at least one carriage (14) of a unit (13) for the treatment of the reinforcement fabric along a direction that is transverse to the feeding direction (A) so as to cover, with its stroke, a first size (W) of the ceramic product (L);
applying an at least partially liquid material, in particular a resin, on the reinforcement material in the area of a cutting line by means of the unit (13) for the treatment of the reinforcement fabric;
hardening the at least partially liquid material applied on the reinforcement material in the area of the cutting line; and
transversely cutting the continuous band of reinforcement material along the cutting line after the at least partially liquid material has at least partially hardened.

12. The method according to claim 11 comprising the step of feeding a continuous band of a reinforcement fabric made of glass fibres interlaced along two main directions (X, Y), which are transverse to one another and define the weft and the warp; wherein the warp fibres are orientated along a direction that is substantially parallel to the feeding direction (A) of the ceramic products (L) and the weft fibres are orientated along a direction that is substantially orthogonal to the feeding direction (A) of the ceramic products (L).

13. The method according to claim 11 or 12, wherein the at least partially liquid material used comprises at least one resin selected in the group comprising: thermosetting resins, resins that polymerize through radiation, and a combination thereof; during the step of hardening the at least partially liquid material, the at least partially liquid material is treated with heat, in particular is heated, and/or with a radiation, in particular a UV radiation.

## Patentansprüche

1. Anlage (1) zum Aufbringen eines Verstärkungsmaterials, das mit einer Vielzahl von Filamenten versehen ist, insbesondere eines Verstärkungsgewebes, auf mindestens eine Oberfläche (BS, FS) eines keramischen Produkts (L), um dessen mechanische Festigkeit zu erhöhen, wobei die Anlage eine Abwickelvorrichtung (7) zum Abwickeln eines ununterbrochenen Verstärkungsmaterialbands; und eine Schneidevorrichtung (24), die dazu eingerichtet ist, das ununterbrochene Verstärkungsmaterialband entlang einer Scheidelinie in Querrichtung zu schneiden, aufweist; wobei die Anlage eine Einheit (13) zur Behandlung des Verstärkungsgewebes aufweist, die stromauf von der Schneidevorrichtung (24) angeordnet ist und eine Vorrichtung (15) zum Aufbringen eines mindestens teilweise flüssigen Materials auf das Verstärkungsgewebe im Bereich der Schneidelinie, und eine Vorrichtung (16) zum Härten des auf das Verstärkungsmaterial im Bereich der Schneidelinie aufgebrachten mindestens teilweise flüssigen Materials aufweist;
**dadurch gekennzeichnet, dass** die Einheit (13) zur Behandlung des Verstärkungsmaterials mindestens einen Wagen (14) aufweist, der entlang einer Richtung, die quer zu einer Zuführungsrichtung (A) des keramischen Produkts (L) ist, bewegbar ist, um so mit seinem Hub eine erste Größe (W) des keramischen Produkts (L) zu bedecken.

2. Anlage nach Anspruch 1, wobei der Wagen (14) die Vorrichtung (15) zum Aufbringen des mindestens teilweise flüssigen Materials und die Vorrichtung (16) zum Härten des mindestens teilweise flüssigen Materials trägt.

3. Anlage nach einem der vorhergehenden Ansprüche, wobei die Vorrichtung (15) zum Aufbringen des mindestens teilweise flüssigen Materials mit einem Zuführkreislauf (21) verbunden ist, der einen Tank (22), der das mindestens teilweise flüssige Material enthält, und einen Kanal (23), der von dem Tank (22) ausgeht, aufweist; wobei der Zuführkreislauf (21) vorzugsweise mindestens eine Vorrichtung zum Konditionieren des mindestens teilweise flüssigen Materials aufweist, die dazu eingerichtet ist, das mindestens teilweise flüssige Material thermisch zu behandeln, insbesondere zu erhitzen, und die entlang des Kanals (23) untergebracht ist.

4. Anlage nach einem der vorhergehen- den Ansprüche, wobei die Vorrichtung (15) zum Aufbringen des mindestens teilweise flüssigen Materials durch mindestens eine Düse (19) verwirklicht ist, die eine jeweilige Achse (20) aufweist, die vorzugsweise quer zur Zuführungsrichtung (A) ist.

5. Anlage nach einem der Ansprüche 1 bis 4, wobei die Vorrichtung (15) zum Aufbringen des mindestens teilweise flüssigen Materials durch mindestens eine Bürste verwirklicht ist.

6. Anlage nach einem der vorhergehenden Ansprüche, wobei das verwendete mindestens teilweise flüssige Material ein thermisch härtbares Harz ist, und die Vorrichtung (16) zum Härten des mindestens teilweise flüssigen Materials ein elektrischer Widerstand oder eine Heißluftabgabevorrichtung oder eine Kombination davon ist.

7. Anlage nach einem der Ansprüche 1 bis 5, wobei das verwendete mindestens teilweise flüssige Material ein Harz ist, das durch Bestrahlung, insbesondere UV-Bestrahlung, polymerisiert, und die Vorrichtung (16) zum Härten des mindestens teilweise flüssigen Materials durch eine Strahlungsquelle, insbesondere UV-Strahlen, vorzugsweise durch eine Hg-Dampflampe oder eine LED-Lampe verwirklicht ist.

8. Anlage nach einem der vorhergehenden Ansprüche und aufweisend einen Rahmen (11), der eine Oberfläche hat, die eine Gleitebene für das ununterbrochene Verstärkungsmaterialband definiert; wobei die Einheit (13) zur Behandlung des Verstärkungsmaterials und die Schneidevorrichtung (24) aufeinanderfolgend entlang des Rahmens (11) angeordnet sind.

9. Anlage nach Anspruch 8 und aufweisend eine Spannvorrichtung (10) für das ununterbrochene Verstärkungsmaterialband, die entlang des Rahmens (11) stromauf von der Einheit (13) zur Behandlung des Verstärkungsmaterials angeordnet ist; wobei die Spannvorrichtung (10) vorzugsweise durch ein Paar Walzen (10*, 10**) verwirklicht ist, die das ununterbrochene Verstärkungsmaterialband zwischen sich halten und zusammenarbeiten, um das Verstärkungsmaterial gespannt zu halten.

10. Anlage nach einem der vorhergehenden Ansprüche, wobei die keramischen Produkte (L) von einer Förderanordnung (2), die unterhalb der Einheit (13) zur Behandlung des Verstärkungsmaterials angeordnet ist, entlang einer Zuführungsrichtung (A) mit einer im Wesentlichen konstanten Geschwindigkeit zugeführt werden; wobei das ununterbrochene Verstärkungsmaterialband mit einer Geschwindigkeit abgewickelt wird, die gleich der Geschwindigkeit ist, mit der die keramischen Produkte (L) zugeführt werden.

11. Verfahren (1) zum Aufbringen eines Verstärkungsmaterials, das mit einer Vielzahl von Filamenten versehen ist, insbesondere eines Verstärkungsgewebes, auf mindestens eine Oberfläche (BS, FS) eines keramischen Produkts (L), um dessen mechanische Festigkeit zu erhöhen, wobei das Verfahren die folgenden Schritte aufweist:
Zuführen eines ununterbrochenen Verstärkungsmaterialbands;
Zuführen des keramischen Produkts (L) in einer Zuführungsrichtung (A) mit einer Geschwindigkeit, die gleich der Geschwindigkeit ist, mit der das ununterbrochene Verstärkungsmaterialband abgewickelt wird;
Bewegen mindestens eines Wagens (14) einer Einheit (13) zur Behandlung des Verstärkungsgewebes entlang einer Richtung, die quer zur Zuführungsrichtung (A) ist, um mit seinem Hub eine erste Größe (W) des keramischen Produkts (L) zu bedecken;
Aufbringen eines mindestens teilweise flüssigen Materials, insbesondere eines Harzes, auf das Verstärkungsmaterial im Bereich einer Schneidelinie mittels der Einheit (13) zur Behandlung des Verstärkungsgewebes;
Härten des auf das Verstärkungsmaterial im Bereich der Schneidelinie aufgebrachten mindestens teilweise flüssigen Materials; und
Querschneiden des ununterbrochenen Verstärkungsmaterialbands entlang der Schneidelinie, nachdem das mindestens teilweise flüssige Material zumindest teilweise gehärtet ist.

12. Verfahren nach Anspruch 11, aufweisend den Schritt eines Zuführens eines ununterbrochenen Verstärkungsgewebebands, das aus Glasfasern hergestellt ist, die entlang zweier Hauptrichtungen (X, Y), die quer zueinander sind und die die Kette und den Schuss definieren, verflochten sind; wobei die Kettfasern entlang einer Richtung orientiert sind, die im Wesentlichen parallel zur Zuführungsrichtung (A) der keramischen Produkte (L) ist, und die Schussfasern entlang einer Richtung orientiert sind, die im Wesentlichen orthogonal zur Zuführungsrichtung (A) der keramischen Produkte (L) ist.

13. Verfahren nach Anspruch 11 oder 12, wobei das verwendete mindestens teilweise flüssige Material mindestens ein aus der folgenden Gruppe ausgewähltes Harz aufweist: thermisch härtbare Harze, Harze, die durch Bestrahlung polymerisieren, und eine Kombination davon; wobei während des Schritts des Härtens des mindestens teilweise flüssigen Materials das teilweise flüssige Material mit Wärme behandelt wird, insbesondere erhitzt wird, und/oder mit einer Strahlung, insbesondere UV-Strahlung, behandelt wird.

## Revendications

1. Installation (1) pour appliquer un matériau de renforcement, qui est pourvu d'une pluralité de filaments, en particulier un tissu de renforcement, sur au moins une surface (BS, FS) d'un produit en céramique (L) afin d'augmenter la résistance mécanique de celui-ci, ladite installation comprenant un dispositif de déroulement (7) pour dérouler une bande continue de matériau de renforcement ; et un dispositif de coupe (24), qui est conçu pour couper transversalement la bande continue de matériau de renforcement le long d'une ligne de coupe ; l'installation comprenant une unité (13) pour le traitement du tissu de renforcement, qui est disposée en amont du dispositif de coupe (24) et comprend un dispositif (15) pour l'application d'un matériau au moins partiellement liquide sur le tissu de renforcement dans la zone de la ligne de coupe, et un dispositif (16) pour le durcissement du matériau au moins partiellement liquide appliqué sur le matériau de renforcement dans la zone de la ligne de coupe ; **caractérisée en ce que** l'unité (13) pour le traitement du matériau de renforcement comprend au moins un chariot (14), qui est mobile le long d'une direction qui est transversale à une direction d'alimentation (A) du produit en céramique (L), de sorte à couvrir, avec sa course, une première dimension (W) du produit en céramique (L).

2. Installation selon la revendication 1, dans laquelle le chariot (14) supporte le dispositif (15) pour l'application du matériau au moins partiellement liquide et/ou le dispositif (16) pour le durcissement du matériau au moins partiellement liquide.

3. Installation selon l'une quelconque des revendications précédentes, dans laquelle le dispositif (15) pour l'application du matériau au moins partiellement liquide est relié à un circuit d'alimentation (21) comprenant un réservoir (22), qui contient le matériau au moins partiellement liquide, et un conduit (23), qui provient du réservoir (22) ; dans laquelle le circuit d'alimentation (21) comprend de préférence au moins un dispositif pour le conditionnement du matériau au moins partiellement liquide, qui est conçu pour traiter thermiquement, en particulier pour chauffer, le matériau au moins partiellement liquide et est logé le long du conduit (23).

4. Installation selon l'une quelconque des revendications précédentes, dans laquelle le dispositif (15) pour l'application du matériau au moins partiellement liquide étant réalisé par au moins une buse (19), qui a un axe (20) respectif, qui est de préférence transversal à la direction d'alimentation (A).

5. Installation selon l'une quelconque des revendications de 1 à 4, dans laquelle le dispositif (15) pour l'application du matériau au moins partiellement liquide est réalisé par au moins une brosse.

6. Installation selon l'une quelconque des revendications précédentes, dans laquelle le matériau au moins partiellement liquide utilisé est une résine thermodurcissable et dans laquelle le dispositif (16) pour le durcissement du matériau au moins partiellement liquide est une résistance électrique ou un dispositif de distribution d'air chaud ou une combinaison de ceux-ci.

7. Installation selon l'une quelconque des revendications de 1 à 5, dans laquelle le matériau au moins partiellement liquide utilisé est une résine qui se polymérise par rayonnement, en particulier par rayonnement UV, et dans laquelle le dispositif (16) pour le durcissement du matériau au moins partiellement liquide est réalisé par une source de rayonnement, en particulier des rayons UV, de préférence par une lampe à vapeur de mercure ou une lampe à DEL.

8. Installation selon l'une quelconque des revendications précédentes et comprenant un cadre (11) ayant une surface qui définit un plan de glissement pour la bande continue de matériau de renforcement ; dans laquelle l'unité (13) pour le traitement du matériau de renforcement et le dispositif de coupe (24) sont disposés en succession le long du cadre (11).

9. Installation selon la revendication 8 et comprenant un dispositif de tension (10) pour la bande continue de matériau de renforcement, qui est disposé le long du cadre (11) en amont de l'unité (13) pour le traitement du matériau de renforcement ; le dispositif de tension (10) étant réalisé de préférence par une paire de rouleaux (10*, 10**), qui maintiennent la bande continue de matériau de renforcement entre eux et coopèrent pour maintenir ledit matériau de renforcement tendu.

10. Installation selon l'une quelconque des revendications précédentes, dans laquelle les produits en céramique (L) sont acheminés le long d'une direction d'alimentation (A) par un ensemble de transport (2), qui est disposé sous l'unité (13) pour le traitement du matériau de renforcement, à une vitesse sensiblement constante ; dans laquelle la bande continue de matériau de renforcement est déroulée à une vitesse qui est égale à la vitesse à laquelle les produits en céramique (L) sont acheminés.

11. Procédé (1) pour appliquer un matériau de renforcement, qui est pourvu d'une pluralité de filaments, en particulier un tissu de renforcement, sur au moins une surface (BS, FS) d'un produit en céramique (L) afin d'augmenter la résistance mécanique de celui-ci, ledit procédé comprenant les étapes consistant à :
acheminer une bande continue de matériau de renforcement ;
acheminer le produit en céramique (L) dans une direction d'alimentation (A) à une vitesse égale à la vitesse à laquelle la bande continue de matériau de renforcement est déroulée ;
déplacer au moins un chariot (14) d'une unité (13) pour le traitement du tissu de renforcement dans une direction qui est transversale à la direction d'alimentation (A) de sorte à couvrir, par sa course, une première dimension (W) du produit en céramique (L) ;
appliquer un matériau au moins partiellement liquide, en particulier une résine, sur le matériau de renforcement dans la zone d'une ligne de coupe au moyen de l'unité (13) pour le traitement du tissu de renforcement ;
durcir le matériau au moins partiellement liquide appliqué sur le matériau de renforcement dans la zone de la ligne de coupe ; et
couper transversalement la bande continue de matériau de renforcement le long de la ligne de coupe après que le matériau au moins partiellement liquide a au moins partiellement durci.

12. Procédé selon la revendication 11, comprenant l'étape consistant à acheminer une bande continue d'un tissu de renforcement constitué de fibres de verre entrelacées le long de deux directions principales (X, Y), qui sont transversales l'une par rapport à l'autre et définissent la trame et la chaîne ; dans lequel les fibres de chaîne sont orientées le long d'une direction qui est sensiblement parallèle à la direction d'alimentation (A) des produits en céramique (L) et les fibres de trame sont orientées le long d'une direction qui est sensiblement orthogonale à la direction d'alimentation (A) des produits en céramique (L).

13. Procédé selon la revendication 11 ou 12, dans lequel le matériau au moins partiellement liquide utilisé comprend au moins une résine choisie dans le groupe comprenant : des résines thermodurcissables, des résines qui polymérisent par rayonnement, et une combinaison de celles-ci ; pendant l'étape de durcissement du matériau au moins partiellement liquide, le matériau au moins partiellement liquide étant traité avec de la chaleur, en particulier étant chauffé, et/ou avec un rayonnement, en particulier un rayonnement UV.
